# DEMANDE DE BREVET EUROPEEN

(11) **EP 0 544 556 A1**
(43) Date de publication de la demande: **02.06.1993**
(21) Numéro de dépôt: 92403061.2
(22) Date de dépôt: 13.11.1992
(51) Int. Cl.: A01B 73/06

(54) **Pulvériseur en V à commande de repliement hydraulique des trains de disques**

(30) Priorité: 15.11.1991 FR 9114085
(71) Demandeur: Etablissements MONERIE & CIE, Société Anonyme dite:, F-37130 Langeais (FR)
(72) Inventeur: Robin, Pierre Henri, F-37130 Langeais (FR)
(74) Mandataire: Jolly, Jean-Pierre

(57) **Abrégé**

L'invention concerne un pulvériseur en V à commande de repliement hydraulique des trains de disques.

Ce pulvériseur est caractérisé par le fait que ses trains de disques (9) sont montés articulés au châssis support (1), chacun selon un axe vertical de rotation (7) fixé à demeure sur celui-ci, à distance de son plan longitudinal médian, de manière à autoriser par des verrouillages de crochetage ou mise en butée adéquats leur mise en position transversale classique de travail ou leur rotation dans une orientation longitudinale adaptée à la position de transport sur route du pulvériseur.

## Description

L'invention concerne un pulvériseur en V à commande de repliement hydraulique des trains de disques.

On sait que les pulvériseurs de type dit en V sont pourvus de deux rangées avant et arrière de trains de disques, attachés au châssis et disposés essentiellement en forme de V en position de service. Les trains de disques, respectivement, avant et arrière peuvent être parfaitement alignés ou légèrement décalés tout en demeurant parallèles l'un à l'autre. Cette dernière disposition correspond à un pulvériseur de type dit en V décalé.

Ces pulvériseurs sont normalement des outils de grande largeur, bien supérieure à 2,50 m qui représente la limite supérieure de transport sur route. Cependant, aucune mesure de repliement des trains de disques pour réduire leur largeur de transport sur route n'a été prévue jusqu'à ce jour sur ce type de pulvériseur.

L'invention a pour objet de remédier à cet inconvénient en proposant un pulvériseur de type en V ou en V décalé, qui se caractérise par le fait que ses trains de disques sont montés articulés au châssis support, chacun selon un axe vertical de rotation fixé à demeure sur celui-ci, à distance de son plan longitudinal médian, de manière à autoriser par des verrouillages de crochetage ou mise en butée adéquats leur mise en position transversale classique de travail ou leur rotation dans une orientation longitudinale adaptée au transport sur route du pulvériseur.

Le pulvériseur peut comporter un cadre ou châssis auto-porteur rigide, auquel les trains de disques sont montés suspendus, le cadre étant pourvu de roues mobiles en hauteur pour le réglage de la profondeur de travail ou le transport sur route. Le cadre est de préférence rectangulaire.

Les axes d'articulation des trains de disques sont disposés de préférence sur les longerons longitudinaux externes du cadre ou bâti, à égale distance du plan longitudinal médian de celui-ci.

Le châssis sera conformé en largeur de façon telle que lorsque les trains de disques sont repliés vers l'avant et vers l'arrière en position de transport, la largeur du pulvériseur ne dépasse pas 2,50 m. Les roues pourront être disposées en position latérale médiane relativement au cadre et les trains venir de part et d'autre des roues en position de transport.

Naturellement, les axes d'articulation des trains de disques se trouvent relativement au cadre sur les lignes délimitant l'angle en V optimal de travail du pulvériseur, à savoir sur deux lignes sensiblement à 110° du plan longitudinal médian à l'avant et à l'arrière de l'appareil. Les axes d'articulation des trains tournés vers l'extérieur sont de préférence disposés aux coins du bâti, ceux des trains de disques opposés étant disposés sur le longeron externe longitudinal opposé.

Ces trains de disques peuvent naturellement être manoeuvrés manuellement (en rotation sur leur axe), mais il est néanmoins intéressant d'équiper le pulvériseur d'un dispositif d'entraînement hydraulique des trains, qui permet à l'opérateur d'agir depuis l'engin tracteur sans avoir à en descendre, les trains étant manoeuvrés simultanément avec prise de butée automatique en fin de course. Cette disposition permet d'épargner à l'opérateur un effort de manoeuvre important et beaucoup de temps si les parcelles de terrain travaillées sont petites.

A cet effet, les trains de disques tournés vers l'extérieur seront munis d'un équipement classique d'entraînement par vérin hydraulique solidaire du train et du bâti, permettant le repliement du train de sa position de travail à celle de transport selon un angle maximal de 75°, variable par échelons réguliers de quelques degrés jusqu'à 15°.

Les trains de disques du côté opposé, montés convergents l'un vers l'autre, seront munis d'une bague rotative solidaire du train et montée coaxialement à leur axe d'articulation, cette bague étant entraînée en rotation par deux vérins décalés angulairement, articulés à cette dernière et au bâti, ces vérins agissant en chaîne l'un à la suite de l'autre sur une demi-rotation environ de manière à permettre un mouvement de rotation d'un angle de 110° au maximum du train, impossible par un seul vérin.

De préférence, l'un des vérins est articulé sur le train lui-même au lieu du bâti, dans une orientation transversale relativement au train, de manière à permettre la rotation du train par rapport à la bague après que cette dernière soit venue en arrêt en fin de course du vérin solidaire du bâti.

L'invention est illustrée ci-après à l'aide d'un exemple de réalisation présenté à titre non limitatif et en référence aux dessins annexés, sur lesquels :
- la figure 1 est une vue de dessus d'un pulvériseur selon l'invention, respectivement, en position de transport en trait continu et en position du travail en trait interrompu, et
- les figures 2 à 4 montrent le dispositif d'entraînement hydraulique des trains de disques convergents dans diverses positions, respectivement, en position de transport, intermédiaire et de service.

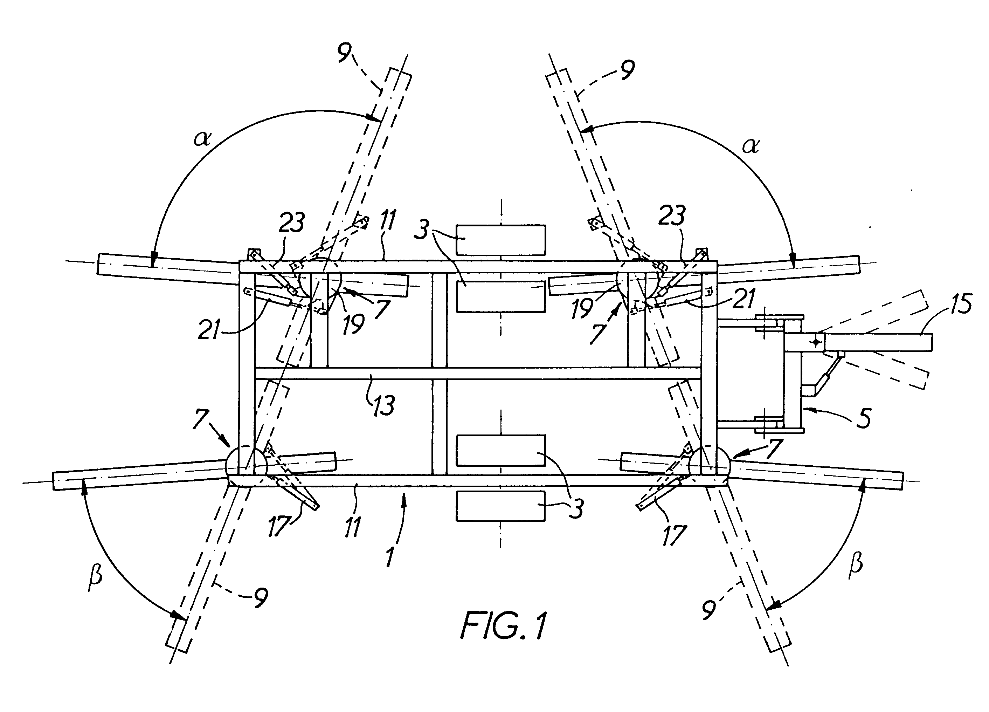

Comme représenté sur la figure 1, le pulvériseur en V selon l'invention comprend essentiellement un châssis support supérieur 1 ou bâti en forme de cadre rectangulaire, muni de roues latérales 3 en sa partie médiane et d'un élément de timon de traction 5 à l'avant, destiné à être relié à l'engin tracteur. Au bâti 1 sont montés articulés suivant des axes de rotation verticaux 7 (perpendiculaires au cadre) quatre trains de disques 9, respectivement, deux à l'arrière et deux à l'avant. Ces trains avant et arrière suspendus par leur axe au bâti, sont alignés deux à deux à la forme de V, sur deux lignes avant et arrière orientées à un angle maximal de 110° par rapport à la direction longitudinale ou au plan longitudinal médian du pulvériseur. Les axes des deux trains de disques tournés vers l'extérieur sont disposés aux coins du bâti. Les deux autres ou trains convergents sont disposés sur le longeron externe 11 opposé, à égale distance des coins respectifs. Ces axes sont au total disposés sur les lignes en V à l'angle optimal de travail du pulvériseur, à savoir à 110° par rapport au plan longitudinal médian. La poutre longitudinale médiane 13 comprend les éléments de crochetage ou de mise en butée classiques de positionnement transversal en travail des trains. Ces éléments sont classiques et n'ont pas été représentés pour la clarté du dessin. Ils peuvent consister en des secteurs à trous dans lesquels sont enfilées des broches, chaque trou permettant de faire varier par échelons réguliers l'orientation des trains de quelques degrés en diminution de l'angle maximal de 110° ou 70° des trains. La variation angulaire totale s'élève par exemple à environ 15° pour une distribution sur chaque secteur de cinq trous à trois degrés chacun. On notera que pour un entraînement hydraulique des trains, chaque trou crocheté sert de butée par sa broche à la rotation du train.

La disposition des roues est classique. Ces roues jumelées de part et d'autre des longerons externes du bâti sont mobiles en hauteur et servent au réglage de la profondeur de travail et au transport sur route de l'appareil.

Dans la position repliée de transport du pulvériseur, les extrémités internes des trains convergents viennent de part et d'autre des roues. De plus, dans cette position la largeur totale du pulvériseur correspond sensiblement à la distance entre les roues externes. Ces éléments déterminent la largeur maximale à donner au cadre, sachant que la largeur totale en position de transport ne doit pas excéder 2,50m ; sa longueur est déterminée à partir de celle des trains et de leur positionnement longitudinal de part et d'autre des roues du côté des trains convergents et de l'emplacement correspondant aux coins des axes des trains tournés vers l'extérieur. Par ailleurs, les trains de disques avant et arrière travaillant respectivement en ligne en continuité l'un de l'autre et la ligne d'orientation de ces trains étant peu éloignée de l'angle droit, on peut considérer par conséquent que la distance entre l'extrémité interne des trains et leur axe d'articulation est égale sensiblement à la demi-largeur du bâti. Ceci détermine pour une largeur de bâti donnée, l'emplacement des axes d'articulation sur les trains.

L'élément de timon avant 5 est également classique. Il comprend une flèche de traction 15 articulée latéralement (selon le trait interrompu) pour permettre une traction en ligne du pulvériseur par l'engin tracteur. Cette flèche peut être prévue télescopique pour s'adapter à l'augmentation de longueur de l'appareil en position de transport du fait de l'orientation longitudinale des trains à l'avant et à l'arrière.

Les trains 9 sont manoeuvrés par des moyens hydrauliques commandés par l'opérateur à partir de l'engin tracteur.

Les trains tournés vers l'extérieur, destinés à être tournés d'un angle maximum de 70 à 75° (angle β ) en position de transport depuis la position de service, peuvent être mûs chacun par un seul vérin 17 monté articulé au train et au bâti, dans l'exemple au longeron externe 11. L'orientation longitudinale de transport est obtenue en position contractée des vérins, tandis qu'il est mis en extension à l'orientation transversale de travail. Dans cette dernière position, la broche du secteur central de verrouillage (à l'avant et à l'arrière) détermine la fin de course de l'extension à l'orientation des trains désirée.

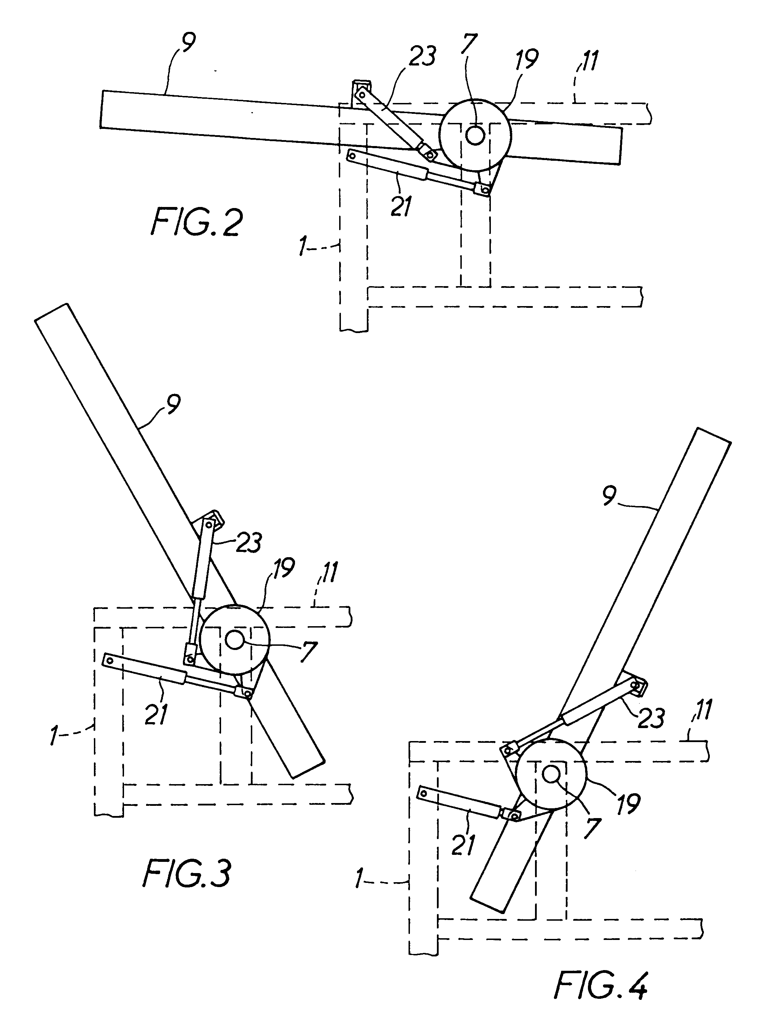

Les trains tournés vers l'intérieur ou convergents, du côté opposé, destinés à être tournés à l'avant et l'arrière, respectivement d'un angle maximal de 110° (angle α ) en position de transport depuis la position de service, sont mûs chacun (figure 2 à 4) au moyen d'un ensemble à bague rotative intermédiaire 19 montée sur leur axe et à deux vérins hydrauliques 21,23, cet ensemble étant solidaire du train et du bâti. A Cette bague 19 sont articulés lesdits deux vérins 21,23 décalés angulairement et agissant successivement. L'un des vérins 21 est articulé au bâti, tandis que l'autre 23 l'est au train lui-même, transversalement à celui-ci. Le train est donc solidaire de la bague par l'intermédiaire de ce second vérin 23 dont le mouvement détermine sa position par rapport à la bague. Ainsi, le premier vérin 21 en actionnant la bague par rapport au bâti assure une première rotation du train, sensiblement sur la moitié de l'angle de rotation total et le mouvement est complété par le second vérin par rapport à la bague. La bague rotative est interposée entre les éléments de palier (non représentés) des axes d'articulation. Les vérins sont alimentés en série, depuis l'engin tracteur, de sorte que lorsque le premier arrive en bout de course, le mouvement se poursuit en continu sur l'autre et vice-versa pour le mouvement inverse. Le mouvement de rotation depuis la position longitudinale est obtenu d'abord par rotation de la bague sous la sollicitation du vérin solidaire du châssis, puis par rotation du train par rapport à la bague comme mentionné précédemment. La commande de manoeuvre s'exerce simultanément sur les quatre trains de disques dans le sens de repliement ou inversement, ceci dans un intervalle de temps restreint, au maximum sur une demi minute, sans que l'opérateur ait à descendre de son engin tracteur et avec prise de butée automatique contre les broches des secteurs centraux en position de service ou en fin de course de vérin en position de transport.

Naturellement, ce dispositif d'entraînement à bague rotative et deux vérins peut être utilisé sur n'importe quel autre train et par exemple en vue de diminuer la longueur hors-tout du pulvériseur en position de transport en ramenant l'extrémité externe des trains tournés vers l'extérieur vers l'intérieur.

On notera enfin que l'invention s'applique également à des pulvériseurs en V décalés assymétriques dont seuls les trains avant ou arrière sont décalés.

## Revendications

1. Pulvériseur de type dit en V ou V décalé, caractérisé en ce qu'il comporte un cadre ou châssis autoporteur rigide (1), auquel les trains de disques (9) sont montés suspendus, le cadre étant pourvu de roues mobiles en hauteur (3) pour le réglage de la profondeur de travail ou le transport sur route et par le fait que ses trains de disques (9) sont montés articulés au châssis support (1), chacun selon un axe vertical de rotation (7) fixé à demeure sur celui-ci, à distance de son plan longitudinal médian, de manière à autoriser par des verrouillages de crochetage ou mise en butée adéquats leur mise en position transversale classique de travail ou leur rotation dans une orientation longitudinale adaptée à la position de transport sur route du pulvériseur.

2. Pulvériseur de type dit en V ou V décalé, selon la revendication 1, caractérisé en ce qu'il comporte un cadre ou bâti rectangulaire (1) pourvu de roues latérales (3).

3. Pulvériseur de type dit en V ou V décalé, selon l'une des revendications 1, 2, caractérisé en ce que les axes d'articulation (7) des trains de disques sont disposés de préférence sur les longerons longitudinaux externes (11) du cadre ou bâti, à égale distance du plan longitudinal médian de celui-ci.

4. Pulvériseur de type dit en V ou V décalé selon l'une des revendications précédentes, caractérisé en ce que les axes d'articulations (7) des trains se trouvent sur deux lignes délimitant une forme en V, par exemple à 110° chacune du plan longitudinal médian du bâti, à l'avant et à l'arrière du pulvériseur.

5. Pulvériseur de type dit en V ou V décalé selon l'une des revendication précédentes, caractérisé en ce que les axes d'articulation (7) des trains tournés vers l'extérieur sont disposés aux coins du bâti.

6. Pulvériseur de type dit en V ou V décalé selon l'une des revendications précédentes, caractérisé en ce que les trains de disques (9) tournés vers l'extérieur sont munis d'un équipement classique d'entraînement par vérin hydraulique (17) solidaire du train et du bâti, permettant le repliement du train de sa position de travail à celle de transport selon un angle β de 75° maximum, variable par échelons réguliers de quelques degrés jusqu'à 15°.

7. Pulvériseur de type en V ou V décalé selon l'une des revendications précédentes, caractérisé en ce que les trains de disques (9) montés convergents l'un vers l'autre sont munis chacun d'une bague rotative (19) solidaire du train et montée coaxialement à leur axe d'articulation (7), cette bague étant entraînée en rotation par deux vérins décalés angulairement, articulés à cette dernière et au bâti, ces vérins agissant en chaîne l'un à la suite de l'autre sur une demi-rotation environ de manière à permettre un mouvement de rotation d'un angle α de 110° au maximum du train.

8. Pulvériseur de type en V ou V décalé, selon l'une des revendications précédentes, caractérisé en ce que les trains (9) tournés vers l'extérieur, destinés à être tournés depuis la position de service à l'avant et l'arrière respectivement, d'un angle α maximal de 110° en position de transport, sont mûs chacun au moyen d'un ensemble à bague rotative intermédiaire (19) montée sur l'axe et à deux vérins hydrauliques (21,23), cet ensemble étant solidaire du train et du bâti, lesdits deux vérins (21,23) étant articulés à la bague (19), décalés angulairement pour agir successivement, l'un des vérins (21) étant articulé au bâti, tandis que l'autre (23) l'est au train lui-même, transversalement à celui-ci.
